**Europäisches Patentamt**

**European Patent Office**

**Office européen des brevets**

(11) Publication number:

**0 105 206**
**B1**

## (12) EUROPEAN PATENT SPECIFICATION

(45) Date of publication of patent specification: **07.02.90**

(21) Application number: **83108636.8**

(22) Date of filing: **01.09.83**

(51) Int. Cl.⁵: **A 01 J 5/08**

(54) **Teat cup inflation.**

(30) Priority: **06.10.82 US 433087**

(43) Date of publication of application:
**11.04.84 Bulletin 84/15**

(45) Publication of the grant of the patent:
**07.02.90 Bulletin 90/06**

(84) Designated Contracting States:
**DE FR GB IT NL**

(56) References cited:
**DE-A-2 048 581**
**DE-C- 908 312**
**GB-A-1 225 146**
**GB-A-1 400 014**
**US-A-1 690 327**
**US-A-2 997 980**
**US-A-3 659 557**
**US-A-4 116 165**

(73) Proprietor: **DEC INTERNATIONAL, INC.**
**P.O. Box 8050**
**Madison, WI 53708 (US)**

(72) Inventor: **Thompson, Paul D.**
**2868 Lakeside St.**
**Madison, WI 53711 (US)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

## Description

### Background of the Invention
#### I. Field of the Invention

This invention relates to teat cup assemblies used for milking cows and more particularly to an improved inflation for use in such a teat cup assembly.

#### II. Description of the Prior Art

The following is a list of prior art United States' patents uncovered in a novelty search directed to the present invention.

| | |
|---|---|
| 168,234 | Ridd |
| 524,738 | Shiels |
| 890,376 | Ridd |
| 1,000,948 | Ridd |
| 1,285,079 | Eklundh et al |
| 1,312,941 | Anderson |
| 1,333,261 | Knowles |
| 2,997,980 | Noorlander |
| 3,659,558 | Noorlander |
| 3,967,587 | Noorlander |

Some of the prior art patents disclose inflation designs having a non-circular configuration. Examples are United States Patent Nos. 3,659,558 and 1,285,079. None of the above-listed prior art patents shows an inflation having a fluted wall configuration as claimed in Claim 1.

### Summary of the Invention

An inflation for mounting in a teat cup assembly including an elongated tubular member having a uniform cross-section from end to end with the wall of said inflation consisting of a plurality of outwardly projecting flute portions connected by a plurality of inwardly projecting flute portions and forming regular undulations as claimed in Claim 1. The outwardly and inwardly projecting flute portions extend vertically and parallel with each other.

### Description of the Drawings

Fig. 1 is a sectional view of a teat cup assembly in which the improved inflation of the present invention is mounted; and

Fig. 2 is a fragmentary sectional view taken along line 2—2 of Fig. 1.

### Description of the Preferred Embodiment

Referring to the drawings, the improved inflation of the present invention is designated generally by reference numeral 10. A teat cup assembly of the type in which inflation 10 could be mounted is shown in U.S. Patent No. 4,269,143. More specifically, inflation 10 is mounted in a teat cup assembly comprised of an upper shell member 12, a central shell member 14 and an end cap member 16.

Upper shell member 12 is of a cylindrical shape and has a lip 18 at the upper end thereof and a retaining groove 20 adjacent the lip 18. The inner surface of member 12 is chamfered at its lower end as indicated by reference numeral 22.

An inwardly extending lug 24 is formed in the wall of member 12 for a purpose to be described hereinafter.

Central shell member 14 is of cylindrical shape and has a lower end portion 26 of reduced diameter which, in turn, has a retaining groove 28 and a threaded portion 30 on the outside surface thereof. Member 14 also has a plurality of axially spaced grooves 32 and a longitudinally extending keyway 34 which extends from the grooves 32 to the upper end of member 14. Member 14 is also provided with a· vacuum line connector tube 36 which communicates with the interior of the member 14 and is formed integrally therewith.

End cap member 16 is comprised of a cylindrical body portion 38 having an internal threaded portion 40 and a funnel-shaped portion 42 having a connector tip 44 for connection to a milk line (not shown).

An inflation retainer member 46 is mounted on the top of member 12. Member 46 (preferably of molded rubber) has a retaining lip 48 which seats in groove 20 of member 12 and a groove 50 in which lip 18 of member 12 is retained. The upper end of inflation 10 is secured in an internal groove 51 in member 46 by a metal retaining ring 53.

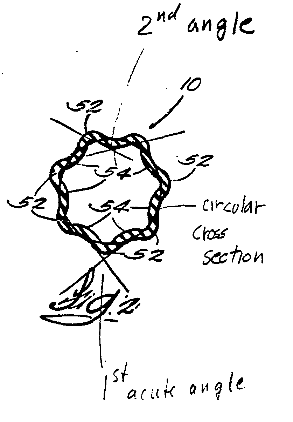

Inflation 10, when in its unassembled condition, is essentially in the form of an elongated tubular member having a uniform cross-section from end to end like that shown in Fig. 2. In the preferred embodiment, inflation 10 is made of silicon material and has a cross-section having a fluted configuration like that shown in Fig. 2. More specifically, the wall of the inflation has seven (7) outwardly projecting flute portions 52 formed therein connected by seven (7) inwardly projecting flute portions 54 and forming regular undulations. Outwardly and inwardly extending flute portions 52 and 54 extend vertically, parallel to each other. Flute portions 52 have a steeper slope than flute portions 54 and flute portions 54 are wider than flute portions 52.

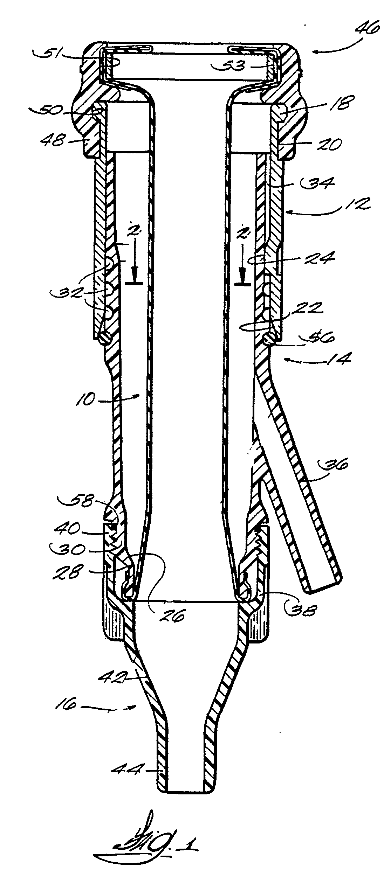

In use, parts of the teat cup assembly are assembled by proceeding as follows. Inflation retainer member 46 is mounted on the top of upper shell member 12 as shown in Fig. 1. Inflation 10 is inserted through the retainer member 46 and secured therein by retaining ring 53 which is installed by a special tool (not shown).

Next the previously assembled inflation 10 and shell member 12 is assembled with central shell member 14. This is accomplished by first mounting a ring member 56 between the lowest of grooves 32 and connecting tube 36 in the proper groove 32. The parts are assembled by aligning lug 24 on member 12 with keyway 34 in member 14 and then sliding member 12 over the upper portion of member 14 until chamfered surface 22 at the bottom edge of member 12 seats against ring 56. Next, the lower end of inflation 10 is stretched through the end of member 14 and then folded back over the end of the member with the end of the inflation seated in groove 28. Shell member 12 is then extended upwardly on central shell member 14 until ring 56 can be engaged into one of grooves 32. Ring 56 in groove 32 thus serves as a stop means to limit the extent of the telescopic engagement of shell member 12 on shell member 14. When the inflation 10 is new, ring 56 is positioned in the lowermost groove 32 as shown in Fig. 1.

The final step of assembly is the installation of cap member 16 on the end of shell member 14. This is accomplished by simply screwing the two parts together by means of mating threaded portions 30 and 40 on the shell and cap respectively. As cap member 16 is tightened snugly on shell 14, the internal shoulder on the cap will bear against the folded-over portion of inflation 10 to thereby seal the parts at the joint between the cap 16 and the shell 14. An O-ring member 58 provides a further sealing means between the parts to prevent entrance of contaminants from outside of the assembly into threaded portions 30 and 40.

The fluted wall inflation 10 provides advantages over prior inflations known to applicant. As previously stated, inflation 10 is preferably made of silicon. By the use of silicon material, the wall thickness of the inflation can be reduced without sacrificing durability. The wall thickness is approximately .05 inches in the preferred embodiment. The result of a reduced wall thickness as well as of the fluted wall configuration is an inflation having greater radial distensibility. The fluted inflation provides a greater range of expansion and can thus accommodate teats having a relatively large size variation. The improved flexibility of the inflation also provides improved massaging action to the cow's teats, i.e., a more uniform massaging action over substantially the entire surface of the teat can be caused to occur because the resting effective diameter of the inflation can be less than the diameter of the teat inserted into it. It is also noted that upon the collapse cycle of the unit (i.e., when atmospheric pressure is applied to the exterior of the inflation), the tendency of the lower end of the inflation to collapse on itself and shut off vacuum to the teat will be substantially reduced due to the fluted configuration of the inflation. By providing an odd number of flutes (seven in the preferred embodiment), the likelihood of shut-off upon inflation collapse is further reduced.

Although the preferred embodiment calls for the inflation to be of uniform cross-section from end-to-end, it will be apparent that the essential feature of improved radial distensibility could be achieved if either the retainer member 46 or the connector tip 44, or modifications thereof, were molded as part of the inflation, or if the cross section changed in some regular fashion from end-to-end, as, for example, in a generally tapered configuration.

## Claims

1. An inflation for mounting in a teat cup assembly for use in a milking unit, comprising an elongated member (10) of an elastomeric material including a tubular body portion for receiving a teat and having a wall consisting of a plurality of outwardly projecting flute portions (52) connected by a plurality of inwardly projecting flute portions (54), said outwardly and inwardly projecting flute portions (52, 54) extending vertically and parallel with each other, the number of each of said outwardly and inwardly projecting flute portions (52, 54) being in excess of three, characterized by the sloping adjacent external surfaces of each pair defining one of said outwardly projecting flute portions (52) extending at a first, approximately acute angle with each other and the sloping adjacent internal surfaces of each pair defining one of said inwardly projecting flute portions (54) extending at a second, obtuse angle with each other, to define a substantially circular internal imaginary cross-section, wherein said flute portions (52, 54) are in the form of regular undulations spaced along the circumference of said imaginary circular cross-section to prevent any complete collapsing and closure of the inflation in the lower portion thereof eventually not contacted by a teat when atmospheric pressure is applied to the exterior of the inflation upon milking.

2. An inflation according to claim 1 in which said elongated member (10) is made of silicon material.

3. An inflation according to claim 2 in which the wall thickness of said elongated member (10) is approximately 1.3 mm.

4. An inflation according to one of the preceding claims in which there are an odd number of outwardly and inwardly projecting flute portions (52, 54).

5. An inflation according to claim 4 in which said odd number is seven.

6. An inflation according to claim 1 in which said elongated member (10) has a uniform cross-section from end-to-end.

## Patentansprüche

1. Pumpeinrichtung zum Anbringen in einer Melkbecheranordnung zur Nutzung in einer Melkeinheit, mit einem länglichen Teil (10) eines gummiartigen Materials, das einen röhrenförmigen Grundbereich zur Aufnahme einer Zitze umfaßt und eine Wandung aufweist, die aus einer Mehrzahl von auswärts hervorstehenden genuteten Bereichen (22) besteht, die mit einer Mehrzahl von einwärts hervorstehenden genuteten Bereichen (54) verbunden sind, wobei die auswärts und einwärts hervorstehenden genuteten Bereiche (52, 54) sich vertikal und zueinander parallel erstrecken und wobei die Anzahl jedes dieser auswärts und einwärts hervorstehenden genuteten Bereiche (52, 54) die Zahl drei übersteigt, dadurch gekennzeichnet, daß die geneigten aneinandergrenzenden Außenflächen jedes Paares, das eines der auswärts hervorstehenden genuteten Bereiche (52) definiert, sich in einem ersten, angenähert spitzen Winkel zueinander erstreckt und daß die geneigten aneinandergrenzenden Innenflächen jedes Paares, das eines der einwärts hervorstehenden genuteten Bereiche (54) definiert, sich in einem zweiten, stumpfen Winkel zueinander erstreckt, um einen im wesentlichen inneren gedachten kreisförmigen Querschnitt zu definieren, wobei die genuteten Bereiche (52, 54) in Form von gleichmäßigen Wellen ausgebildet sind, die entlang des Umfanges des gedachten kreisförmigen Querschnittes beabstandet sind, um ein vollständiges Zusammensacken und Verschließen der Pumpeinrichtung in dessen unterem Bereich zu verhindern, welcher nicht mit einer Zitze in Berührung befindlich ist, wenn atmosphärischer Druck auf das äußere der Pumpeinrichtung beim Melken angelegt wird.

2. Pumpeinrichtung nach Anspruch 1, in der das längliche Teil (10) aus Siliconmaterial besteht.

3. Pumpeinrichtung nach Anspruch 2, in der die Wanddicke des länglichen Teiles (10) ungefähr 1,3 mm beträgt.

4. Pumpeinrichtung nach einem der vorangegangenen Ansprüche, in der eine Anzahl der auswärts und einwärts hervorstehenden genuteten Bereiche (52, 54) ungerade ist.

5. Pumpeinrichtung nach Anspruch 4, in der die ungerade Zahl sieben beträgt.

6. Pumpeinrichtung nach Anspruch 1, in der das längliche Teil (10) einen gleichförmigen Querschnitt von einem Ende zum anderen Ende umfaßt.

**Revendications**

1. Manchon souple destiné à être monté dans un gobelet trayeur pour un appareil à traire, qui comprend un élément allongé (10) en matériau élastomère comportant une partie tubulaire constituant le corps recevant le trayon et ayant une paroi constituée par une pluralité de parties cannelées (52) faisant saillie vers l'extérieur et reliées par une pluralité de parties cannelées (54) faisant saillie vers l'intérieur, ces parties cannelées (52, 54) qui font saillie vers l'extérieur et vers l'intérieur s'étendant verticalement et parallèlement les unes aux autres et le nombre de ces parties cannelées (52, 54) qui font saillie vers l'extérieur et vers l'intérieur étant supérieur à trois, caractérisé en ce que les surfaces extérieures voisines inclinées de chaque paire qui délimite l'une des parties cannelées (52) qui font saillie vers l'extérieur forment l'une avec l'autre un angle approximativement aigu et que les surfaces intérieures voisines inclinées de chaque paire qui délimite l'une des parties cannelées (54) qui fait saillie vers l'intérieur forment l'une avec l'autre un angle obtus, de manière à déterminer une section transversale imaginaire interne sensiblement circulaire dans laquelle les parties cannelées (52, 54) forment des ondulations régulières réparties le long de la circonférence de la section transversale circulaire imaginaire en question, de manière à empêcher un écrasement complet et la fermeture complète du manchon dans sa partie inférieure qui peut ne pas être en contact avec le trayon alors que la pression atmosphérique agit sur la surface extérieure du manchon au cours de la traite.

2. Manchon souple selon la revendication 1, caractérisé en ce que l'élément allongé (10) est en un matériau à base de silicium.

3. Manchon souple selon la revendication 2, caractérisé en ce que l'épaisseur de paroi de cet élément allongé (10) est de 1,3 mm environ.

4. Manchon souple selon l'une des revendications 1 à 3, caractérisé en ce qu'il comporte un nombre impair de parties cannelées (52, 54) faisant saillie à l'extérieur et à l'intérieur.

5. Manchon souple selon la revendication 4, caractérisé en ce que le nombre impair en question est sept.

6. Manchon souple selon la revendication 1, caractérisé en ce que l'élément allongé (10) a, d'un bout à l'autre, une section transversale uniforme.

*Fig. 1*

2<sup>nd</sup> angle

52

10

52

54

52

52

54

circular
Cross
Section

52

*Fig. 2*

1<sup>st</sup> acute angle